# EUROPEAN PATENT SPECIFICATION

(11) **EP 2 939 526 B1**
(45) Date of publication and mention of the grant of the patent: **20.09.2017**
(21) Application number: 15166047.9
(22) Date of filing: 30.04.2015
(51) Int. Cl.: A01G 1/04

(54) **METHOD FOR PROCESSING CASING SOIL**
VERFAHREN ZUR VERARBEITUNG VON DECKERDE
PROCÉDÉ DE TRAITEMENT DE TERRE DE GOBETAGE

(30) Priority: 01.05.2014 NL 2012729; 05.09.2014 NL 2013419
(43) Date of publication of application: 04.11.2015
(73) Proprietor: Van den Boomen, Henricus Nicolaas Cornelis, 5421 CN Gemert (NL); Van den Boomen, Johannes Maria Franciscus, 5421 XC Gemert (NL)
(72) Inventor: Van den Boomen, Henricus Nicolaas Cornelis, 5421 CN Gemert (NL); Van den Boomen, Johannes Maria Franciscus, 5421 XC Gemert (NL)
(74) Representative: Algemeen Octrooi- en Merkenbureau B.V.

(56) References cited:
- EP-A1- 2 455 357
- WO-A1-2012/101213
- WO-A1-2013/108196
- GB-A- 2 166 633
- NL-C- 2 009 402
- US-A- 4 978 501

## Description

The present invention relates to a method for processing casing soil used in the cultivation of mushrooms using a culture medium. The present invention further relates to the use of casing soil as obtained by carrying out the present method.

A mushroom farm in principle needs two elements for growing mushrooms: colonised compost, also referred to as culture medium, and casing soil. Colonised compost contains the necessary nutrients for the mushroom. Suitable sources for the culture medium are, for example, horse manure with straw, poultry manure and lime. Casing soil, usually consisting of a mixture of different types of peat and spent lime (a by-product from the sugar industry) provides the supply of water to the culture medium, prevents dehydration of the culture medium and provides an advantageous environment in which mushrooms can form buttons. The casing soil is preferably free of pathogenic organisms and has the correct structure, it must have a pH of about 7.5 and be capable of retaining moisture. The bacteria that live in the casing soil stimulate the mycelium to produce the mushrooms; without these bacteria, no mushrooms will grow, so that good casing soil is paramount in the cultivation of mushrooms.

Generally a layer of about 35 cm of colonised compost or culture medium is provided in the growing beds. On the layer of colonised compost, a top layer of about 4.5 cm, also called casing soil, is provided. From the compost, mycelium threads grow into the casing soil. The threads form small buttons here, which in turn grow out into fully grown mushrooms, after which harvesting can begin. In the mushroom growing industry, a harvesting period is indicated by the specialist term "flush". A mushroom farmer harvests two or three flushes per bed.

Mushroom compost or colonised compost is the culture medium for growing mushrooms and is usually composed of manure, such as horse manure with straw, poultry manure and lime. The mushroom compost is colonised with mycelium. Usually, a top layer, for example peat, is placed on top of the mushroom compost, which layer functions as casing soil for the purpose of maintaining an optimum moisture content while the mushrooms are growing.

In current-day practice, spent mushroom compost, i.e. mushroom compost which becomes available after the mushrooms have been harvested, is discharged as fertilizer, whether or not generally together with the casing soil placed on the mushroom compost for cultivating the mushrooms. A drawback of discharging spent mushroom compost as fertiliser is that the product has limited added value and that, moreover, the transport costs are high.

From International application WO 2014/116114 there is known a method for composting spent mushroom compost under conditions for providing composted spent mushroom compost with a dry matter content of 45% to 90%, which method includes a step of separating the spent mushroom compost from the casing soil prior to the composting of the spent mushroom compost. Said International application WO 2014/116114 further discloses that the casing soil is dried, using heat obtained by composting the spent mushroom compost. Such casing soil is used as potting compost or manure concentrate.

From Dutch patent 194986 there is known a method for processing mushroom feet by removing the mushroom feet from the bed in which the mushrooms are grown, followed by the steps of cutting, drying and mechanically separating the remaining casing soil therefrom.

From European patent application EP 2 455 357 there is known a method for treating mushroom compost, comprising the steps of supplying the compost to be treated to a first separator, such as a screen, so as to obtain a first fraction comprising smaller compost particles, and a second fraction comprising larger compost particles, partially removing water from the larger compost particles, colouring said partially dried material using a colorant material, and further removing water from the coloured material so as to obtain thus treated compost.

From International application WO 2012/101213 there is known a method for recycling used mushroom casing soil comprising mushroom waste residue, which method comprises the steps of a) providing used mushroom casing soil comprising mushroom waste residue, and b) reducing the mean particle size of the mushroom waste residue to a mean particle size smaller than 6 mm, thereby providing reduced mushroom casing soil.

From International application WO 2013/108196 there is known a method for preparing casing soil for use in the cultivation of mushrooms, wherein a number of starting materials are thoroughly mixed and separated into fractions having different particle sizes.

From British publication GB 2 166 633 and US patent US 4,978,501 there is known a method for continuous sterilisation of moist horticultural material, wherein the material to be treated is passed through a tunnel where it is exposed to radio frequency electromagnetic waves.

One aspect of the present invention is to provide of a method for reprocessing the casing soil used in the cultivation of mushrooms into reusable residual materials in an environmentally-friendly and efficient manner.

Another aspect of the present invention is to provide of a method for processing casing soil, which casing soil is used in the cultivation of mushrooms on a culture medium, wherein the spent casing soil is subjected to further treatment so as to prepare it for new use.

Another aspect of the present invention is to provide of a method for processing casing soil, which casing soil is used in the cultivation of mushrooms using a culture medium, wherein the amount of the harmful substances present in the casing soil is reduced to a minimum.

The present invention thus relates to a method for processing casing soil used in the cultivation of mushrooms using a culture medium, wherein the method comprises the following steps:
i) storing the aforesaid casing soil,
ii) subjecting the casing soil from step i) to a heat treatment, and
iii) subjecting said heated casing soil from step ii) to a drying treatment, wherein the storage according to step i) takes place for a period of at least 5 days at a temperature ranging from 0-35 °C.

Using the above steps, the present inventors have found that one or more of the above objects is/are achieved. In the present method as described above, the term "casing soil" is understood to mean the top layer provided on the mushroom compost in particular for regulating the moisture content. The term "casing soil" can thus comprise a combination of raw materials, but in practice it is usually composed on the basis of peat, betacal filter (spent lime) and marl. The use of the aforesaid method makes it possible to minimise the amount of the harmful bacteria (gender, type) present in the casing soil, in which regard inter alia Escherichia (E. coli), Salmonella (S. typhi), Klebsiella (K. pneumonia) and Enterobacter (E. enterogenes) are to be considered, as a result of which the treated casing soil thus obtained is suitable, among other purposes, for use as animal litter, also referred to as floor covering.

The present inventors in particular have found that it is desirable that the casing soil be stored first before the drying treatment and the heat treatment are carried out. The present inventors have surprisingly found that the residual products present in the casing soil after the cultivation of mushrooms has been stopped, in particular mycelium and mushroom feet, have an adverse effect as regards the special use of the end product. By allowing the casing soil to "mature" for some time after the cultivation of mushrooms, such residual products in the casing soil will decompose in a natural manner. Storing the casing soil can thus be regarded as a form of "rest" of the casing soil, as a result of which the mushroom feet and mycelium threads that are still present in the casing soil will shrivel. The present inventors have found that such residual products will hardly disappear, if at all, upon being subjected to a steam treatment or other heat treatment, so that it is important to carry out storage step i) of the present method. After such a storage step i) has been carried out, the casing soil thus treated can be further processed according to the present method so as to obtain the intended end product.

The storage according to the present invention takes place for a period of at least 5 days, preferably at least 7 days, at a temperature ranging from 0-35 °C, preferably 5-20 °C. The present inventors have found that a minimum period of 5 days is necessary in order to achieve a sufficient reduction of the amount of residual products in the casing soil. According to another, preferred, embodiment, the storage comprises a period of 5-20 days, preferably 5-14 days, in particular at a temperature in the range of 5-20 °C. It is also possible, however, to use a storage period longer than the aforesaid period, for example a period of one or more months.

In a special embodiment it is desirable that the casing soil be turned over during such a period of storage. The term "turning over" is to be understood to include the working up, ploughing up or rooting up of the casing soil, which will speed up the process of maturing of the residual products of the mushroom cultivation that are still present in the casing soil.

It is desirable that the casing soil be separated from the culture medium after the cultivation of mushrooms, whereupon the casing soil thus obtained is subjected to step i).

The phrase "separating the culture medium from the casing soil" is to be understood to refer to the situation after the cultivation of mushrooms in the casing soil has already taken place. The casing soil, which is stored in step i), is thus to be regarded as the already "spent" casing soil.

It will be understood that a certain amount of culture medium may be present in the separated casing soil after the casing soil has been separated from the culture medium. The term "separated casing soil" is thus in fact to be understood to be the top layer of the cultivation bed, which cultivation bed comprises a layer of compost or culture medium and a top layer present thereon, in particular the casing soil.

Separating the culture medium from the casing soil can for example take place by using means that are already generally known, such as fixed knives, rotating knives and rotating screw conveyors. During such a separation, the dimensions of the mushroom residue still present in the casing soil, in particular the mushroom feet, are inevitably reduced.

According to the present invention it is thus possible that the separation of the casing soil from the culture medium is carried out by company A, whilst company B occupies itself with the after-treatment of the casing soil. The storage of casing soil can thus take place both at company A and at company B. It is also possible, however, for the separation of the casing soil from the culture medium and the further processing of the casing soil to take place at the same company.

In a special embodiment of the present method it is desirable that the casing soil be subjected to a reducing step prior to the heat treatment. Such a reducing step is preferable because the casing soil has a slightly compact and set structure after the mushrooms have been cultivated thereon, which is considered to be disadvantageous to the heat treatment. Such a reducing step can therefore be regarded as a homogenisation step, in particular as regards the particle size of the casing soil. In particular an unimpeded transport of heat through the layer of casing soil is of major importance in that regard, and the reducing step enables the heat to penetrate through the entire bed of casing soil. The heat treatment is in particular carried out by passing through steam, preferably for a period of 1-20 hours, especially preferably 6-14 hours. In the heat treatment it is in particular desirable that the amount of Klebsiella (K. pneumoniae) is reduced to a minimum, in which regard it is preferable that the temperature of the material to be subjected to the heat treatment is at least 58 °C.

According to a special embodiment of the present invention, the drying treatment is carried out to a dry matter content of 20-70 wt.%, in particular 20-60 wt.%, preferably 30-50 wt.%, calculated on the basis of the total weight of the dried material. The present inventors have found that a dry matter content higher than the aforesaid upper limit will lead to undesirable dust formation of the end product. A dry matter content lower than the aforesaid lower limit will lead to a sticky end product, which is undesirable. Drying is a mass transfer process which consists of the removal of water or moisture through evaporation from solid matter. In the most frequent case, a gas flow is used, for example air, which discharges the vapour as moisture. Other possibilities for drying include vacuum drying, tumbled drying, dielectric drying (using microwaves), freeze drying, supercritical drying (using superheated steam), and drying by means of natural air. The reduction of the water content can also be carried out by centrifuging, for example. Drying preferably takes place by using a hot air flow.

In the method according to the present invention it is furthermore possible to add one or more additives, preferably selected from the group consisting of lime, phosphorous and nitrogen, to the casing soil, preferably after the drying treatment. Such additives serve to prepare the treated casing soil for a particular use. This is for example done by adding lime so as to adjust the acidity. An example is to use ground eggshells as the lime additive, which additive also contains other components, such as zinc, in addition to a high percentage of lime.

It is also desirable to subject the casing soil to a reducing step after the drying treatment. Such a reducing step results in any lumps or chunks of casing soil being separated from each other so as to thus obtain a slightly homogenous casing soil. Such a reducing step can therefore also be regarded as a homogenisation step, in particular as regards the particle size of the casing soil.

Although a combination of a heat treatment and are drying treatment has been discussed in all the above-described cases, in a specific embodiment it is also possible to subject the casing soil only to a drying treatment.

The present invention in particular relates to the use of casing soil obtained by carrying out the above-described method as animal litter, in particular for horses, cattle, pigs and/or poultry. Another use of the casing soil obtained by carrying out the above-described method is as a potting compost component.

In a special embodiment it is desirable that the casing soil be mixed with one or more additives selected from the group consisting of coconut residue, sawdust, straw, flax and hemp. The use of such a mixture may for example be desirable from the viewpoint of the moisture-absorbing capacity.

In a special embodiment of the present invention it is desirable that one or more steps of the present method be carried out in same space where the cultivation of the mushrooms takes place.

The present invention will now be explained by means of a few examples, which examples must by no means be construed as being limitative.

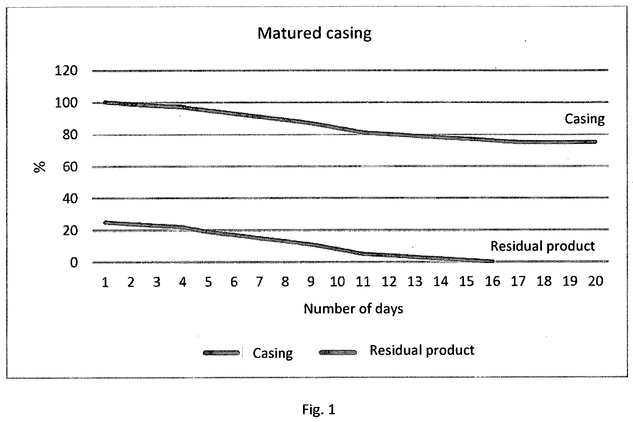

Furthermore, a figure is appended in which the influence of the storage period on the amount of residual products in the casing soil is shown. At the moment when the storage period begins, the amount of residual products is about 25 wt.%, about 20 wt.% being mushroom feet and about 5 wt.% being mycelium, based on the total weight of the casing soil. From the figure it appears that the total amount of residual products in the casing soil rapidly decreases all of a sudden after a storage period of at least 5 days. A storage period of more than 16 days does not result in a significant reduction of the amount of residual products in the casing soil. The storage period relates to an ambient temperature of 15 °C.

### Example 1

A culture medium (amount: 26,000 kg) was separated after the harvesting of mushrooms into 19,760 kg of spent mushroom compost and 6,240 kg of casing soil. The casing soil was carried off and stored at a temperature of 15 °C for a week. After said period of rest, large chunks were mechanically removed from the casing soil so as to obtain particles having a particle size of about 1-10 mm. The thus reduced particles were placed on a surface provided with openings, after which steam with a temperature of 120 °C was passed through via the underside of the surface for a period of 12 hours. Temperature sensors were provided at different positions in the bed of casing soil for monitoring the heating process. After termination of the heat treatment, the casing soil treated in this way was dried to a dry matter content of 40 wt.%, calculated on the basis of the total weight of the dried material, which was done by passing through hot air. After the drying treatment, the dried material was reduced again and prepared for use as animal litter, in particular for horses, cattle, pigs and/or poultry. The dried material was also suitable for use as a potting compost component. The casing soil thus treated can be mixed with an additive yet.

### Example 2

The same operations as in example 1 were carried out, with this difference that after the period of rest the casing soil thus treated was dried to a dry matter content of 40 wt.%, calculated on the basis of the total weight of the dried material, which was done by passing through hot air. After the drying treatment, the dried material was prepared for use as animal litter, in particular for horses, cattle, pigs and/or poultry. The dried material was also suitable for use as a potting compost component. The casing soil thus treated can be mixed with an additive yet.

### Comparative example 1

The same operations as in example 1 were carried out, with this difference that a storage period of the casing soil was not used. The product that was eventually obtained was unsuitable for use as animal litter because of the amount of harmful residual products it contained.

### Comparative example 2

The same operations as in example 2 were carried out, with this difference that a storage period of the casing soil was not used. The product that was eventually obtained was unsuitable for use as animal litter because of the amount of harmful residual products it contained.

## Claims

1. A method for processing casing soil used in the cultivation of mushrooms using a culture medium including a step of a heat treatment and a drying treatment, wherein
the method comprises the following steps:
i) storing the aforesaid casing soil,
ii) subjecting the casing soil from step i) to a heat treatment, and
iii) subjecting said heated casing soil from step ii) to a drying treatment,
**characterised in that** the storage according to step i) takes place for a period of at least 5 days at a temperature ranging from 0-35 °C.

2. A method according to claim 1, **characterised in that** said casing soil is separated from the culture medium after the cultivation of mushrooms, whereupon the casing soil thus obtained is subjected to step i).

3. A method according to any one of the preceding claims, **characterised in that** the storage according to step i) takes place at a temperature ranging from 5-20 °C.

4. A method according to claim 3, **characterised in that** said storage takes place for a period of 5-20 days, preferably 5-14 days.

5. A method according to any one of the preceding claims, **characterised in that** the casing soil is subjected to a reducing step prior to the heat treatment.

6. A method according to any one of the preceding claims, **characterised in that** the casing soil is subjected to a reducing step after the drying treatment.

7. A method according to any one of the preceding claims, **characterised in that** the drying treatment is carried out to a dry matter content of 20-60 wt.%, calculated on the basis of the total weight of the dried material.

8. A method according to any one of the preceding claims, **characterised in that** the drying treatment is carried out to a dry matter content of 30-50 wt.%, calculated on the basis of the total weight of the dried material.

9. A method according to any one of the preceding claims, **characterised in that** the method further comprises the step of adding of one or more additives, preferably selected from the group consisting of lime, phosphorous and nitrogen, to the casing soil, preferably after the drying treatment.

10. A method according to any one of the preceding claims, **characterised in that** the heat treatment is carried out by passing through steam, preferably for a period of 1-20 hours, especially preferably 6-14 hours.

11. A method according to claim 10, **characterised in that** the temperature of the material subjected to the aforesaid heat treatment is at least 58 °C.

12. A method according to one of the preceding claims 1-11, **characterised in that** after the drying treatment, the dried material was prepared for use as animal litter, in particular for horses, cattle, pigs and/or poultry.

13. A method according to one of the preceding claims 1-11, **characterised in that** after the drying treatment, the dried material was prepared for use as a potting compost component.

14. A method according to the preceding claim 12 or 13, **characterised in that** the treated casing soil is mixed with one or more additives selected from the group consisting of coconut residue, sawdust, straw, flax and hemp.

## Patentansprüche

1. Ein Verfahren zur Verarbeitung von Deckerde, die in der Kultivierung von Pilzen unter Verwendung eines Kulturmediums verwendet wird, einschließlich eines Wärmebehandlungsschritts und eines Trocknungsbehandlungsschritts, worin das Verfahren die folgenden Schritte umfasst:
i) Lagern der vorbenannten Deckerde,
ii) Unterwerfen der Deckerde aus Schritt i) einer Wärmebehandlung, und
iii) Unterwerfen dieser erwärmten Deckerde aus Schritt ii) einer Trocknungsbehandlung,
**dadurch gekennzeichnet, dass** das Lagern gemäß Schritt i) für einen Zeitraum von mindestens 5 Tagen bei einer Temperatur von 0-35°C erfolgt.

2. Ein Verfahren nach Anspruch 1, **dadurch gekennzeichnet, dass** die Deckerde vom Kulturmedium nach der Kultivierung der Pilze getrennt wird, wonach die so erhaltene Deckerde Schritt i) unterworfen wird.

3. Ein Verfahren nach einem der vorhergehenden Ansprüche, **dadurch gekennzeichnet, dass** das Lagern gemäß Schritt i) bei einer Temperatur von 5-20°C erfolgt.

4. Ein Verfahren nach Anspruch 3, **dadurch gekennzeichnet, dass** das Lagern für einen Zeitraum von 5-20 Tagen, vorzugsweise 5-14 Tagen, erfolgt.

5. Ein Verfahren nach einem der vorhergehenden Ansprüche, **dadurch gekennzeichnet, dass** die Deckerde vor der Wärmebehandlung einem Reduktionsschritt unterworfen wird.

6. Ein Verfahren nach einem der vorhergehenden Ansprüche, **dadurch gekennzeichnet, dass** die Deckerde nach der Trocknungsbehandlung einem Reduktionsschritt unterworfen wird.

7. Ein Verfahren nach einem der vorhergehenden Ansprüche, **dadurch gekennzeichnet, dass** die Trocknungsbehandlung bis zu einem Trockenmasseanteil von 20-60 Gew.-%, berechnet auf Basis des Gesamtgewichts des getrockneten Materials, durchgeführt wird.

8. Ein Verfahren nach einem der vorhergehenden Ansprüche, **dadurch gekennzeichnet, dass** die Trocknungsbehandlung bis zu einem Trockenmasseanteil von 30-50 Gew.-%, berechnet auf Basis des Gesamtgewichts des getrockneten Materials, durchgeführt wird.

9. Ein Verfahren nach einem der vorhergehenden Ansprüche, **dadurch gekennzeichnet, dass** das Verfahren, vorzugsweise nach der Trocknungsbehandlung, ferner den Schritt der Zugabe eines oder mehrerer Additive zur Deckerde umfasst, vorzugsweise ausgewählt aus der Gruppe, bestehend aus Kalk, Phosphor und Stickstoff.

10. Ein Verfahren nach einem der vorhergehenden Ansprüche, **dadurch gekennzeichnet, dass** die Wärmebehandlung durch Durchleiten von Dampf durchgeführt wird, vorzugsweise für einen Zeitraum von 1-20 Stunden, besonders bevorzugt 6-14 Stunden.

11. Ein Verfahren nach Anspruch 10, **dadurch gekennzeichnet, dass** die Temperatur des Materials, das der vorbenannten Wärmebehandlung unterworfen wurde, mindestens 58°C beträgt.

12. Ein Verfahren nach einem der vorhergehenden Ansprüche 1-11, **dadurch gekennzeichnet, dass** das getrocknete Material nach der Trocknungsbehandlung für den Einsatz als Tierstreu, insbesondere für Pferde, Rinder, Schweine und/oder Geflügel vorbereitet wurde.

13. Ein Verfahren nach einem der vorhergehenden Ansprüche 1-11, **dadurch gekennzeichnet, dass** das getrocknete Material nach der Trocknungsbehandlung für den Einsatz als Topferdekomponente vorbereitet wurde.

14. Ein Verfahren nach einem der vorhergehenden Ansprüche 12 oder 13, **dadurch gekennzeichnet, dass** die behandelte Deckerde mit einem oder mehreren Additiven, ausgewählt aus der Gruppe, bestehend aus Kokosrückstand, Sägemehl, Stroh, Flachs und Hanf, vermischt wird.

## Revendications

1. Procédé de traitement de la terre de gobetage utilisée dans la culture de champignons en utilisant un milieu de culture comportant une étape de traitement thermique et de traitement de séchage, dans lequel
le procédé comprend les étapes suivantes consistant :
i) à stocker la terre de gobetage susmentionnée,
ii) à soumettre la terre de gobetage de l'étape i) à un traitement thermique, et
iii) à soumettre ladite terre de gobetage chauffée de l'étape ii) à un traitement de séchage,
**caractérisé en ce que**
le stockage selon l'étape i) a lieu pendant une période d'au moins 5 jours à une température comprise entre 0 et 35°C.

2. Procédé selon la revendication 1, **caractérisé en ce que** ladite terre de gobetage est séparée du milieu de culture après la culture de champignons, après quoi la terre de gobetage ainsi obtenue est soumise à l'étape i).

3. Procédé selon l'une quelconque des revendications précédentes, **caractérisé en ce que** le stockage selon l'étape i) a lieu à une température comprise entre 5 et 20°C.

4. Procédé selon la revendication 3, **caractérisé en ce que** ledit stockage a lieu pendant une période comprise entre 5 et 20 jours, de préférence entre 5 et 14 jours.

5. Procédé selon l'une quelconque des revendications précédentes, **caractérisé en ce que** la terre de gobetage est soumise à une étape de réduction avant le traitement thermique.

6. Procédé selon l'une quelconque des revendications précédentes, **caractérisé en ce que** la terre de gobetage est soumise à une étape de réduction après le traitement de séchage.

7. Procédé selon l'une quelconque des revendications précédentes, **caractérisé en ce que** le traitement de séchage est réalisé à une teneur en matière sèche de 20 à 60% en poids, calculée en se basant sur le poids total du matériau séché.

8. Procédé selon l'une quelconque des revendications précédentes, **caractérisé en ce que** le traitement de séchage est réalisé à une teneur en matière sèche de 30 à 50% en poids, calculée en se basant sur le poids total du matériau séché.

9. Procédé selon l'une quelconque des revendications précédentes, **caractérisé en ce que** le procédé comprend en outre l'étape consistant à ajouter un ou plusieurs additif(s), de préférence choisi(s) dans le groupe constitué de de la chaux, du phosphore et de l'azote, à la terre de gobetage, de préférence après le traitement de séchage.

10. Procédé selon l'une quelconque des revendications précédentes, **caractérisé en ce que** le traitement thermique est réalisé par passage à travers la vapeur, de préférence pendant une période de 1 à 20 heure(s), particulièrement de préférence de 6 à 14 heures.

11. Procédé selon la revendication 10, **caractérisé en ce que** la température du matériau soumis au traitement thermique susmentionné est égale à au moins 58°C.

12. Procédé selon l'une des revendications précédentes 1 à 11, **caractérisé en ce qu'**après le traitement de séchage, le matériau séché a été préparé pour une utilisation comme litière pour animaux, en particulier pour les chevaux, le bétail, les porcs et/ou la volaille.

13. Procédé selon l'une des revendications précédentes 1 à 11, **caractérisé en ce qu'**après le traitement de séchage, le matériau séché a été préparé pour une utilisation comme composant de terreau de rempotage.

14. Procédé selon la revendication précédente 12 ou 13, **caractérisé en ce que** la terre de gobetage traitée est mélangée avec un ou plusieurs additif(s) choisi(s) dans le groupe constitué de résidus de noix de coco, de la sciure, de la paille, du lin et du chanvre.
